# EUROPEAN PATENT APPLICATION

(11) **EP 2 426 804 A1**
(43) Date of publication of application: **07.03.2012**
(21) Application number: 10175006.5
(22) Date of filing: 02.09.2010
(51) Int. Cl.: H02J 7/00, H02J 7/35

(54) **Charging of electrical vehicles**

(71) Applicant: ABB Research Ltd., 8050 Zürich (CH)
(72) Inventor: Oudalov, Alexandre, 5442, Fislisbach (CH); Yuen, Cherry, 5400, Baden (CH)
(74) Representative: Meier Obertüfer, Jürg

(57) **Abstract**

A method for charging a battery of an electrical vehicle 28 from an energy storage system 26 for storing electrical energy received from a power grid 22 comprises the step of estimating an amount of electrical energy in the energy storage system 26 that originates from renewable energy sources 14, 16 and the step of charging the battery of the electrical vehicle 28 in response thereto.

## Description

### FIELD OF THE INVENTION

The invention relates to the field of renewable energy. In particular, the invention relates to a method, a program element, a computer-readable medium, a charging station and a central charging system for charging a battery of an electrical vehicle.

### BACKGROUND OF THE INVENTION

Electrical vehicles, i.e. vehicles driven by an electric motor, normally comprise one or more batteries for supplying the electrical vehicle with electric energy. An environment friendly way to charge the battery of an electrical vehicle may be to use renewable or green energy which may be harvested from CO₂ emission free energy sources such as solar or wind installations. However, these "clean" renewable energy sources may only produce energy dependent on environmental conditions like the actual wind speed or the actual solar irradiance. In general, renewable energy sources are intermittent energy sources and their instantaneous production may considerably deviate from the forecasted value. Therefore, grid operators may not fully rely on these sources to meet the electrical load and usually must maintain an expensive reserve power to cover the fluctuations of renewable generation output, which of cause increase the total power system operating cost.

An efficient way to use intermittent renewable energy sources may be to employ an energy storage system. One of the best storage technologies for this application may be a battery energy storage system. Depending on the technology of the battery, the battery energy storage system may discharge fast in minutes and may slowly discharge over a few hours. The charging efficiency may also be relatively high, for example up to 95% for Li-Ion batteries.

### DESCRIPTION OF THE INVENTION

Given an appropriate energy storage system and a sufficient communication infrastructure, one may try to maximize the charging of the electrical vehicles using green energy based on information such as current conditions of the state of the charge of the electrical vehicles, the energy storage system, as well as short-term weather and load forecasts, for example up to 24 hours ahead.

It is an object of the invention to improve the possibilities of charging electrical vehicles with green energy.

This objective is achieved by the subject-matter of the independent claims. Further exemplary embodiments are evident from the dependent claims.

An aspect of the invention relates to a method for charging a battery of an electrical vehicle. The battery may be charged from a local energy storage system for temporarily storing electrical energy, either received from a power grid or likewise generated locally. The electrical energy may comprise green energy, i.e. energy generated by renewable energy sources, as well as conventional energy, i.e. energy generated by conventional energy sources. The energy storage system may be part of a charging station and may be local with respect to the other parts of the charging station. The energy storage may be seen as an intermediate storage for green energy.

According to an embodiment of the invention, the method comprises the step of estimating an amount of electrical energy in the energy storage system that originates from renewable energy sources. It may be possible that the amount of electrical energy is nearly exactly determined during the estimation. However, the term "estimating" may also comprise that only a rough estimate of the available amount of energy is made. Further, the amount of energy may be forecasted for a near future. The estimation may be done by a suitable controller.

According to an embodiment of the invention, the method comprises the step of charging of the battery of the electrical vehicle in response to the estimation of the amount of green energy in the storage system. For example, the battery may be charged when there is much green energy in the energy storage system or when, due to the amount of green energy in the storage system, the charging price is low. To achieve this, the electrical vehicles, or their drivers respectively, may be informed about the amount of green energy in the charging station or the charging price. Further, the electrical vehicles be advised, when to come to the charging station, if as much green energy as possible should be charged or when a certain charging price has been reached. The charging price may be low, given the assumption that renewable energy may be represented as a cheap alternative to non-renewable counterpart, which may be realized and is indeed being realized nowadays through the different support schemes from governments and regulation bodies worldwide.

If a charging station is employing the method as described above, a short term forecast up to some hours ahead (e.g. 24 hours) may be produced and signals can be sent to an electrical vehicle to indicate when (within the forecast range) how much green energy is available or what charging price will be. If there are multiple charging stations in the vicinity of the electrical vehicle, the driver of the electrical vehicle may decide autonomously based on the suggestions given by the integrated intelligent system in the vehicle or by the central charging system from which charging station it should be charged, for example from the charging station with the highest ratio of green energy to conventional energy.

A further aspect of the invention relates to a program element, several program elements or a computer program for charging a battery of an electrical vehicle, which, when being executed by one or several processors, is adapted to carry out the steps of the method as described in the above and in the following. For example, program elements may run in processors of the charging station, the electrical vehicle and a central system, for example a grid management system.

A further aspect of the invention relates to a computer-readable medium, in which the program element is stored. A computer-readable medium may be a floppy disk, a hard disk, an USB (Universal Serial Bus) storage device, a RAM (Random Access Memory), a ROM (Read Only memory), an EPROM (Erasable Programmable Read Only Memory) or a FLASH memory. A computer readable medium may also be a data communication network, e.g. the Internet, which allows downloading a program code.

A further aspect of the invention relates to a charging station for charging a battery of an electrical vehicle. The charging station may be seen as a part of system being an integrated electrical vehicle and energy storage solution enhancing the use of green energy.

According to an embodiment of the invention, the charging station comprises an energy storage system for storing electrical energy received from a power grid. The energy storage system may be a battery energy storage system. The charging station further comprises a controller executing the method for charging a battery of an electrical vehicle as describe in the above and in the following. The charging station may comprise an input connection for connecting the charging station to an electrical power grid for receiving electrical power from the power grid. It may comprise an output connection for connecting the battery of the electrical vehicle to the energy storage system and (directly or indirectly via the energy storage system to the power grid. The battery of the electrical vehicle may be connected to (the output connection of) the charging station by connecting the electrical vehicle to the charging station. Otherwise the battery of the electrical vehicle may be detached from the electrical vehicle and after that connected to the charging station.

A further aspect of the invention relates to a central charging manager.

According to an embodiment of the invention, the central charging manager is adapted to communicate with a plurality of charging stations as described in the above and in the following. The central charging manager is estimating or forecasting the amount of energy from the renewable energy sources and the plurality of charging stations is receiving the estimated available power from the central charging manager. The amount of energy may be estimated from weather forecast data that is stored in the central charging manager. For example, the central charging manager may download the weather forecast data only in certain time intervals, for example every day.

According to an embodiment of the invention, the central charging manager is part of a grid management system for managing the power grid, for example a grid SCADA system for surveying the power grid.

To summarize, the use of green energy for the charging of electrical vehicles may be maximized by using intermediate energy storage systems. This may be achieved by integrating short term weather forecast and load forecast into a central grid management system (for example a DMS, a small scale SCADA system or substation computers, etc). The weather forecast may be obtained from a weather forecast provider.

It has to be understood that features of the method as described in the above and in the following may be features of the charging station or the central charging manager as described in the above and in the following.

If technically possible but not explicitly mentioned, also combinations of embodiments of the invention described in the above and in the following may be embodiments of the method, the charging station and the central charging manager.

These and other aspects of the invention will be apparent from and elucidated with reference to the embodiments described hereinafter.

### BRIEF DESCRIPTION OF THE DRAWINGS

The subject matter of the invention will be explained in more detail in the following text with reference to preferred exemplary embodiments which are illustrated in the attached drawings.
Fig.1 schematically shows a charging system according to an embodiment of the invention.
Fig.2 schematically shows a plurality of charging stations in communication with a plurality of electrical vehicles according to an embodiment of the invention.
Fig. 3 shows a diagram of the output of an energy storage system according to an embodiment of the invention.
Fig. 4 shows a flow diagram of a method for charging a battery of an electrical vehicle according to an embodiment of the invention.
Fig. 5 shows a diagram indicating the required energy content in energy storage system for the charging of an electrical vehicle on a sunny day according to an embodiment of the invention.
Fig. 6 shows a diagram indicating the required energy content in energy storage system for charging of an electrical vehicle on a cloudy day according to an embodiment of the invention.
Fig. 7 shows a diagram illustrating a numerical example for tariff calculation based on Fig. 5.

In principle, identical parts are provided with the same reference symbols in the figures.

### DETAILED DESCRIPTION OF EMBODIMENTS

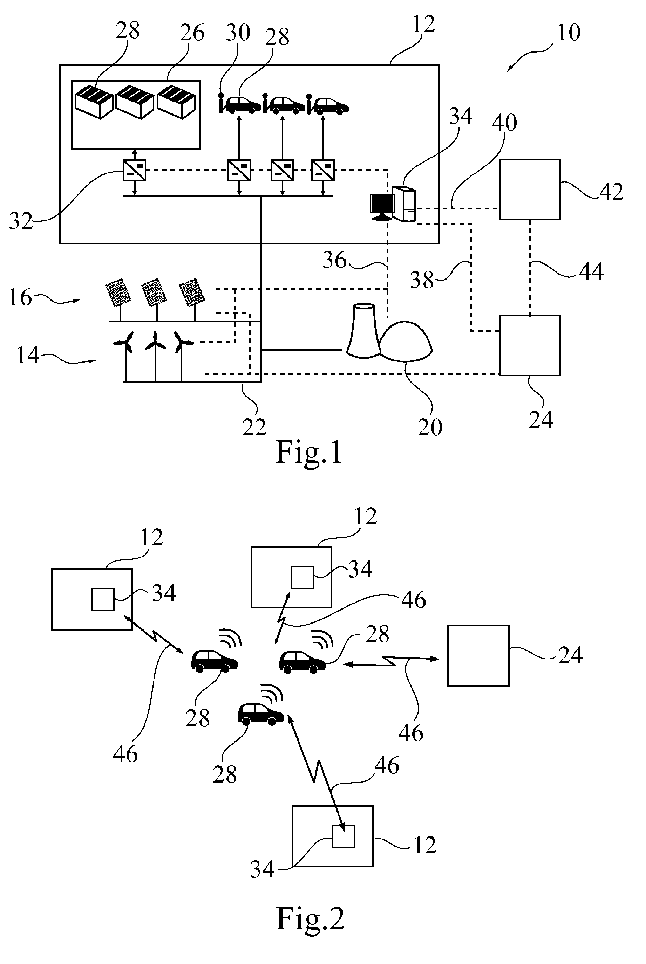

Fig.1 schematically shows a charging system 10 comprising a first charging station 12, renewable energy sources 14, 16, conventional energy sources 20, a power grid 22 connecting the energy source 14, 16, 20 with the charging station 12 and a central charging manager 24. The central charging manager 24 may be part of a grid management system or a SCADA system for surveying and/or controlling the power grid 22. Examples for renewable energy sources are wind turbines 14 (which power output depends on the actual wind speed) and photovoltaic systems 16 (which power output depends on the actual solar irradiance).

In one embodiment, a renewable energy source 14, 16 belongs to the charging station 12. In this case, the electric energy from the renewable energy source 14, 16 may be directly charged into the energy storage system 26 (and not indirectly over lines belonging the owner of the power grid 22). In this case, the charging station 12 may comprise the renewable energy source 14, 16.

The charging station 12 comprises a battery energy storage system 26 with a plurality of rechargeable batteries, which may be charged with energy form the power grid 22. It may be possible that instead of the batteries another type of energy storage system is used, for example a thermal energy storage system, a compressed air energy storage, etc.

The energy in the energy storage system 26 and from the power grid 22 may be used for charging electrical vehicles 28 connected to the charging station 12 via charging points or charging poles 30. To ensure enough energy supply for the charging station 12, also main grid energy from the conventional power source 20 may be necessary to charge the electrical vehicles 18, either indirectly through the energy storage system 26 or directly from the power grid 22.

The charging points 30 and the energy storage system 26 are electrically connected with each other and are electrically connected with the power grid 22 over converters 32, since the power grid 22 may be operated with an AC current while DC current is used for charging batteries. If a local DC grid is available then a DC/DC connection may also be possible.

For controlling the loading of the energy storage system 26a and the loading of the electrical vehicles 28, the charging station 12 comprises a controller 34 which may also used for controlling the converters 32 and other parts of the charging station 12.

The parts 26, 30, 32, 34 of the charging station 12 may be all close to each other, for example located in one building housing the charging station. Such a building may be a conventional filling station, where also conventional vehicles may be filled with fuel.

For determining the actual power production of the energy sources 14, 16, 20, the charging station 12 and in particular the controller 34 may have a communication connection 36 to the energy sources 14, 16, 20 over which the controller 34 may receive data about the actual power production. These data also may be received over a communication connection 38, which interconnects the controller 34 of the charging station with the central charging manager 24, which (as a grid management system) may receive these data from the energy sources 14, 16, 20 and may need it for managing the load in the power grid 22.

For determining forecast data with respect to the power production of the renewable energy sources 14, 16, i.e. a forecast for green energy available in the future, the controller 34 of the charging station may comprises a communication connection 40 to a weather forecast provider 42, over which weather forecast data may be received. Alternatively or additionally, the central charging manager 24 may be connected over a communication connection 44 to the weather forecast provider. The central charging manager 24 may store the weather forecast data and may send it to the controller 34 of the charging station, for example when requested by the controller 34.

It is also possible that the central charging manager 24 determines the power production forecast for the renewable energy sources 14, 16 with the aid of the weather forecast data. In this case, only the overall power production of the renewable energy sources 14, 16 which is available over the power grid 22 may be send to the charging station 12.

Another possibility is that a renewable energy source 14, 16 determines its power production forecast itself and sends this forecast over the communication connection 36 to the controller 34 of the charging station or to the central charging manager 24.

Fig.2 schematically shows a charging system 10 with a plurality of charging stations 12 that may be constructed like the charging station 12 in Fig. 1. The charging stations 12 are in communication with a plurality of electrical vehicles 28, for example over wireless communication connections 46. However, it may also be possible that the electrical vehicles 26 communicate with the central charging manager 24 which may coordinate the communication with the charging stations 12 via the communication connection 38 (see Fig. 1).

The communication connection 46 may be used for transmitting the charging price signal, the charging time, the state of charge of the battery of the electrical vehicle 28, the geographical position (for example from a GPS system from the electrical vehicle 28) of the electrical vehicle 28 or the route (calculated through a coordination between a navigation system of the electrical vehicle 28 and central charging system) between the charging stations 12 (or the central charging manager 24) and the vehicle 28.

Bidirectional communication may be required for the data exchange between the central charging system, the charging stations 12 and the electrical vehicles 28. The most practical and technical feasible way may be to use an existing cellular network, i.e. a subscription to a local telecommunication provider through a SIM card. In other words, the vehicles 28, the central charging manager 24 and the controllers 34 of the charging stations 12 may have SIM cards and the communication connection 46 may be a wireless telephone link.

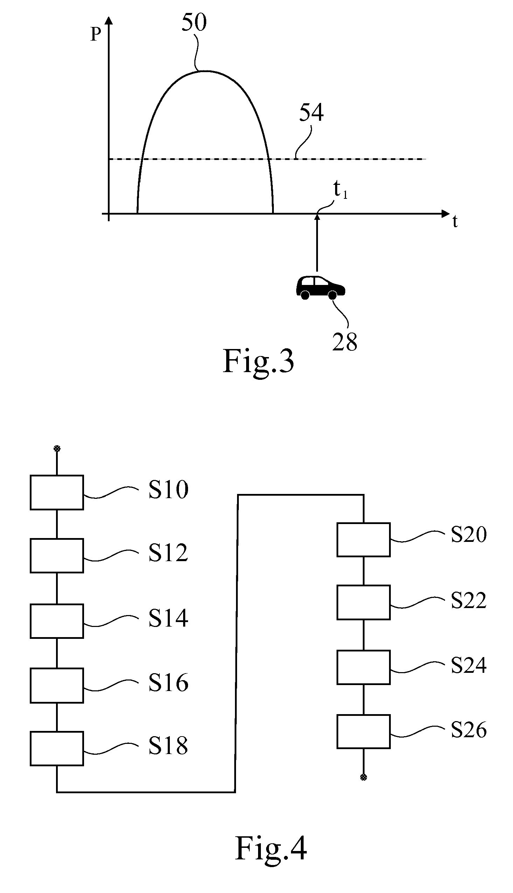

Fig. 3 shows a diagram of the output of the energy storage system 26. The diagram shows the power output p over the time t. The continuous line 50 indicates the possible output of a renewable energy source 14, 16 over the time, which is not constant but depends on the weather conditions in the vicinity of the renewable energy source 14, 16. For example, the renewable energy source may be a photovoltaic system 16 which output depends on the solar irradiance. If the energy from the photovoltaic system is not buffered, much electrical energy is produced exceeding the need for charging the batteries of the electrical vehicles 28, and no electrical energy is present for charging the battery of the vehicle, if the sun is not shining.

Therefore, the energy storage system 26 is used as an intermediate storage system 26 for buffering green energy from the renewable energy source 14, 16. The unbalanced output 50 is used for charging the energy storage system 26, which is adapted to generate a expected output power 54 at t₁. For example, if at time point t₁ an electrical vehicle 28 is arriving at the charging station 12, the renewable energy source 14, 16 is not generating electrical energy at time point t₁, green energy is available for the charging of the electrical vehicle 28. Without the energy storage system 26, no green energy would be available.

The capacity of the energy storage system 26 may be much larger than the capacity of a single battery for an electrical vehicle 28. The advantage of having a larger stationary energy storage system 26 may be that the green energy can be stored and made available to another time when for example, the sun is not shining or the wind is not blowing anymore. This could also allow multiple vehicles to be charged simultaneously.

Fig. 4 shows a flow diagram for a method for charging a battery of an electrical vehicle 28.

In step S10, weather forecast data is received from the weather forecast provider 42 in the charging station 12, the central charging manager 24 or the renewable energy source 14, 16, for example over the communication connections 40 or 44. The weather forecast data comprises solar irradiance data and/or wind speed data and may cover a forecast term of at least 12h or at least 24h. Professional data may be required such as solar irradiance and wind speed so that the corresponding power output from the solar and wind installations can be calculated by the respective controller. It has to be noted that the charging station 12, the central charging station 24 or the renewable energy source 14, 16 may have suitable controllers that are adapted for executing the respective step as described with respect to Fig. 4.

In step S12, a forecast for the available power from the renewable energy source(s) 14, 16 is determined with the help of the weather forecast data. If this is done by the renewable energy source 16 or by the central charging system these data may be sent to the charging station 12.

In step S14, the charging station 12 controls the charging of the energy storage system 26. The control may depend on the available electrical power from the renewable energy sources. This may be done based on the actual power output of the renewable energy sources 14, 16 or based on the forecast data determined in step S12. Since the power output 50 of the renewable energy source 14, 16 is time dependent, the energy storage system 26 may be charged only when much energy from renewable energy sources is available in the power grid 12, such that as much green energy as possible is charged in the energy storage system 26. If high demand period coincides with the high instantaneous availability of renewable resources there is also the possibility of charging the vehicles directly from the source and therefore avoiding the losses through power electronics and the chemical/electrical processes in the battery.

In step S16, the amount of green energy in the energy storage system 26 (at a future time point) is estimated. This may be done based on the weather forecast data or on the power production forecast derived therefrom. The amount of electrical energy is estimated for a forecast term, for example 12h or 24h. This may be done by the charging station 12 itself or by the central charging manager 24 for each charging station 12.

In step S18, a communication with an electrical vehicle 28 (or a plurality of vehicles 28) is established, for example over the communication connections 46. In particular, this communication may take place when the electrical vehicle 28 is not connected to the charging station 12 for charging the battery. For example, the electrical vehicle 28 may send its state of charge to the charging station 12 and demands a charging price forecast at a certain time point in future.

In step S20, a charging price (or a price forecast) for charging the electrical vehicle 28 at the future time is calculated. The price may depend on the ratio of energy from renewable energy sources 14, 16 and conventional energy sources 20 stored in the energy storage system, i. e. on the amount of green energy in the energy storage system 26. The conventional energy sources may be any base-load generation which is usually provided at a lower price during night time. Such cheap conventional energy sources may be used to charge the energy storage system during night time to fit the need of the forecasted demand and the amount of forecasted renewable energy output.

In this context, it may be assumed that the locations of the renewable energy sources 14, 16, the charging station 12 and the energy storage system 26 are electrically close, such that the price signals do not get distorted because of congestions arising from the electrical networks. In the case of the renewable energy source 14, 16 being far away from the charging station (for example a remote wind farm, etc.), it may be assumed that congestions are negligible or the price signals may be adjusted accordingly when they are not negligible.

Even though it is not the only way, one practical means of defining signals is to set the charging tariffs low when the charging station has an abundant amount of green energy available and high when green energy is scarce. Under the assumption of elastic demand, the owners/operators of the electrical vehicles may charge then their electrical vehicle when and where it is cheap. Those who are environmental-friendly but are normally inelastic may be encouraged to charge their vehicles when prices are low because they may be aware that low prices mean "renewable energy is now available".

In step S22, the amount of green energy in the energy storage system and the calculated charging price are sent back to the electrical vehicle 28. Depend on different values received from different charging stations 12, the owner of the electrical vehicle 28 may decide at which charging station 12 the electrical vehicle 28 should be charged. This may also depend on a driving time/distance to a particular charging station, i. e. an energy needed to arrive at the destination).

During the communication in the steps S18 and S22, the following data values may be exchanged between the electrical vehicles 28 and the charging station 12 (or the central charging manager 24):
a state of charge of the battery of the electrical vehicle 28 (The state of charge may be given as a percentage of the maximum capacity, or a remaining driving distance before next re-filling);
a time of arrival of the electrical vehicle at the charging station with the energy storage system, for example from the navigation system of the electrical vehicle 28 (the arrival time may also be estimated at the central charging station;
an amount of renewable energy available for charging the electrical vehicle 28 at a certain time, which may be directly communicated or indirectly reflected in the charging price, the next item;
a charging price for charging the electrical vehicle 28 at a certain time;
an interest of the electrical vehicle in being charged with renewable energy (or at least a certain percentage of renewable energy);
a position and/or a destination of the electrical vehicle, for example from the navigation system.

If data privacy is an issue, then only the state of charge and the current position (only precise enough that is belongs to a certain zone) of the electrical vehicle 28 may be communicated to the charging station 12 or the central manager 24, and the returning signals will only indicate the time and location of cheapest station 12.

In step S24, the charging station 12 and/or the central charging manager 24 determines a demand in renewable energy for charging the electrical vehicles 28 that are interested in renewable energy and that arrive at the charging station 12 within a predetermined term, for example 12h or 24h. The demand may be estimated based on statistical values collected in the past as well as current and other forecasted data.

If the charging stations 12 knows (at least roughly) the demand in green energy, it may optimize the charging of the energy storage system 26, such that the demand is at least approximately met and as much available power from the renewable energy sources is used for storing the necessary energy. In such a way no excess renewable energy is wasted that could be used in other places.

In step S26, an electrical vehicle 28 arrives at the charging station 12 and the battery of the charging system is charged from the energy storage system 26 (and optionally the power grid 22. It should be noted that the batteries in the electrical vehicles may be charged even when they are not completely empty. The current technology of lithium-ion batteries (common for EVs) has overcome the concern over memory effect.

The determination of the amount of green energy in the energy storage system 26 and the calculation of varying prices (tariffs) based on the availability of green energy will be explained with respect to the following figures.

In the following it will be assumed that the charging station 12 takes its energy from a photovoltaic system 16 either directly connected to the energy storage system 26 of the charging station 12 or at least belonging to the charging station 12, so that a corresponding low price for energy from the photovoltaic system 16 has to be paid. Additional energy may be taken from a main grid 22, i.e. a power grid that is connecting a lot of further energy sources and consumers.

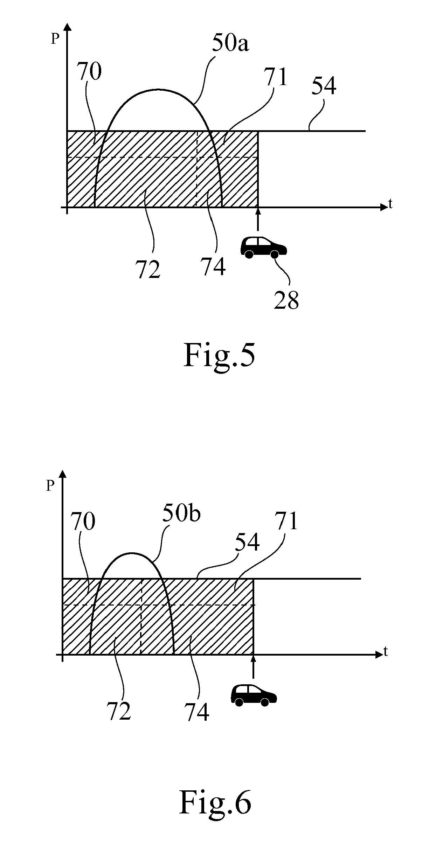

Fig.5 and Fig.6 show diagrams indicating a state of the energy storage system 26 at t₁ (indicated by the position of the car 28 and arrow on the time axis) when the vehicle starts charging, both on a sunny day and a cloudy day. The shaded area indicates the total amount of available energy for charging, whereas the actual charging rate or power, especially in the case of fast charging, may be different from the expected power indicated symbolically by line 54.

The energy storage system may comprise remaining energy 70, 71 from the previous period (for example the previous day). The remaining energy may comprise remaining energy from renewable energy sources 70 and remaining energy from conventional energy sources 71. Beside the remaining energy 70, 71, the forecasted load comprises further forecasted renewable energy 72 and forecasted conventional (non-green) energy 74 from the main grid 22.

On a sunny day the output 50a of a photovoltaic system 16 is large and less energy has to be taken from the conventional energy sources 20. On a cloudy day, the output 50b is small and more energy has to be taken from the conventional energy sources 20. However, the forecasted load for charging depends on the number of electrical vehicles 28 having interest in charging and enough available energy has to be in the energy storage system 26, so all vehicles can be charged.

With the weather forecast data, the amount of (forecasted) solar energy 72 in the energy storage system 12 can be calculated. With the forecast of loads (electrical vehicles 28 coming to the charging station 12 for charging), the necessary output 54 of the energy storage system 26 and the remaining amount of energy 74 required to maintain reliable supply taken from the power grid 22 can be calculated. Under the assumption that the energy the charging station 12 has to buy from the power grid 22 is always more expensive than the cost of energy from its own photovoltaic generation (through subsidies/regulations), then the tariff can be set according to the relative ratio of green energy to that taken from the power grid 22.

When an electrical vehicle is charging at the charging station 12, the forecast of tariffs on different days may be different. Since in a sunny day the amount of energy required from the power grid 22 is smaller, the tariff is small (Fig. 6). In a cloudy day the amount of energy required from the power grid is bigger, resulting in a higher tariff.

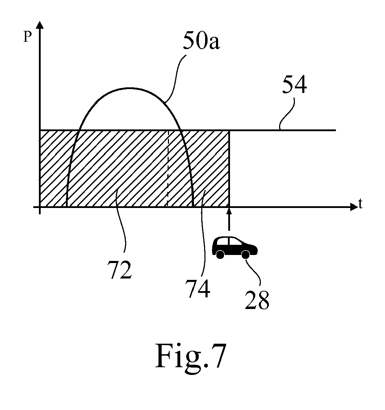

The following example with respect to Fig. 7 shows concretely how this is realized. Given a forecast 50a of solar energy output (already converted with the irradiance data) of the next 24 hours, let the total amount of energy required for the charging station 12 between 5pm and 6pm be 1 energy unit, which should coincide with capacity of the energy storage system 26. Assuming there is no remaining energy left over from the previous period and given the forecasted consumption 54, the forecasted solar energy 72 and the amount of energy 74 bought from the power grid 22 can be calculated. In this case, the aggregated tariff is calculated based on the composition of energy stored in the energy storage system 26, which is 70% from solar energy at a price of 2 ¢/kWh and 30% from the power grid 22 at a price of 5 ¢/kWh. Simple arithmetic shows that the aggregated tariff is 2.9¢/kWh. This tariff can then be broadcasted at the beginning of the day, e.g. 7am so that people can plan accordingly their car usage. This is a simple example illustrating how the price can be calculated for a certain time point or time period. In general the same concept may be used to calculate a price curve for a longer period, e.g. a day, with one tariff for each hour.

To summarize, with the charging station 12, the use of green energy for the charging of electrical vehicles 28 should be encouraged. The system 12 may comprise an energy storage system 26 sized to the right dimension to remove fluctuation caused by weather conditions. With a forecasted consumption of energy and forecasted green energy output, the corresponding amount of energy the charging station 12 has to buy/take from the main grid 22 may be calculated. A composite price may be calculated and broadcasted to electrical vehicles 28 in the operation region of the charging station 12 or the central charging manager 24, so that owners of the electrical vehicles 28 can plan their car usage accordingly. For example, for a long journey the owners may work out the route such that as much as possible green energy is used for charging their vehicle 28.

The method of charging an electrical vehicle may be implemented as programmed software modules or procedures, respectively. However, one skilled in the art will understand that the method can be implemented fully or partially in hardware.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art and practising the claimed invention, from a study of the drawings, the disclosure, and the appended claims. In the claims, the word "comprising" does not exclude other elements or steps, and the indefinite article "a" or "an" does not exclude a plurality. A single processor or controller or other unit may fulfil the functions of several items recited in the claims. The mere fact that certain measures are recited in mutually different dependent claims does not indicate that a combination of these measures cannot be used to advantage. Any reference signs in the claims should not be construed as limiting the scope.

## Claims

1. A method for charging a battery of an electrical vehicle (28) from an energy storage system (26) for storing electrical energy received from a power grid (22), the method comprising:
estimating an amount of electrical energy in the energy storage system (26) that originates from renewable energy sources (14, 16);
charging the battery of the electrical vehicle (28) in response thereto.

2. The method of claim 1,
wherein the amount of electrical energy is estimated for a forecast term.

3. The method of claim 1 or 2, further comprising:
receiving weather forecast data;
wherein the amount of electrical energy originating from renewable energy sources is estimated based on the weather forecast data.

4. The method of claim 3,
wherein the weather forecast data comprises solar irradiance data and/or wind speed data.

5. The method of one of the preceding claims, further comprising:
controlling the charging of the energy storage system (26) dependent on the available electrical power from the renewable energy sources (14, 16).

6. The method of one of the preceding claims, further comprising:
determining a demand in renewable energy for charging electrical vehicles (28) that are interested in renewable energy and that arrive at the energy storage system (26) within a predetermined term;
optimizing the charging of the energy storage system (26), such that the demand is at least approximately met and as much available power from the renewable energy sources (14, 16) is used for storing the necessary energy.

7. The method of one of the preceding claims, further comprising:
calculating a charging price for charging an electrical vehicle (28) at a future time, the charging price depending on the ratio of energy from renewable energy sources (14, 16) and conventional energy sources (20) stored in the energy storage system (26).

8. The method of one of the preceding claims, further comprising:
communicating with the electrical vehicle (28).

9. The method of one of the preceding claims, further comprising:
exchanging at least one of the following data:
a state of charge of the battery of the electrical vehicle (28);
a time of arrival of the electrical vehicle at the energy storage system (26);
an amount of renewable energy available for charging the electrical vehicle (28) at a certain time;
a price of charging the electrical vehicle (28) at a certain time;
an interest of the electrical vehicle (28) in being charged with renewable energy;
a position and/or a destination (64) of the electrical vehicle (28).

10. A program element for charging a battery of an electrical vehicle (28), which, when being executed by a processor, is adapted to carry out the steps of the method of one of the claims 1 to 9.

11. A computer-readable medium, in which the program element of claim 10 is stored.

12. A charging station (12) for charging a battery of an electrical vehicle (28), the charging station comprising:
an energy storage system (26) for storing electrical energy received from a power grid (22);
a controller (34) executing the method according to one of the claims 1 to 9.

13. A central charging manager (24),
wherein the central charging manager (24) is adapted to communicate with a plurality of charging stations (12) according to claim 12;
wherein weather forecast data is stored in the central charging manager (24); wherein the central charging manager (24) is adapted for estimating the amount of energy from the renewable energy sources (14, 16);
wherein each of the plurality of charging stations (12) is adapted for receiving the estimated available amount of energy from the central charging manager (24).

14. The central charging manager (24) according to claim 13,
wherein the central charging manager (24) is part of a grid management system for managing the power grid (22).
